# EUROPEAN PATENT SPECIFICATION

(11) **EP 4 477 463 B1**
(45) Date of publication and mention of the grant of the patent: **04.03.2026**
(21) Application number: 24179966.7
(22) Date of filing: 04.06.2024
(51) Int. Cl.: B60N 2/015, B64D 11/06

(54) **ADJUSTABLE LOCKING DEVICE OF A MOTOR VEHICLE SEAT**
VERSTELLBARE VERRIEGELUNGSVORRICHTUNG EINES KRAFTFAHRZEUGSITZES
DISPOSITIF DE VERROUILLAGE RÉGLABLE D'UN SIÈGE DE VÉHICULE AUTOMOBILE

(30) Priority: 12.06.2023 IT 202300011970
(43) Date of publication of application: 18.12.2024
(73) Proprietor: Fadiel Italiana S.r.l., 30020 Meolo (VE) (IT)
(72) Inventor: DOMENEGHINI, Fabio, 30020 MEOLO (VE) (IT); DOMENEGHINI, Nicola, 30020 MEOLO (VE) (IT)
(74) Representative: Piovesana, Paolo

(56) References cited:
- US-A- 5 489 172

## Description

The present invention concerns an adjustable locking device of a seat to the structure of a motor vehicle, in particular to its floor.

Devices are known for quickly fastening the seats to the floor of the passenger compartment of a motor vehicle and for releasing them equally quickly. They are often used in minibuses, vans and the like to adapt them to the particular needs that arise from time to time and which are linked to the need to transform the motor vehicle in order to use it mainly or exclusively for the transport of people or luggage or wheelchairs for the disabled. It is in fact clear that if the transport of people is required, the motor vehicle must be equipped with seats, while in the case of transport of luggage or wheelchairs for the disabled, the motor vehicle must be freed from the seats or part of the seats to make room to luggage or prams. And it is equally clear that for reasons of practicality the transformation of the motor vehicle must be very rapid, comfortable, precise and safe.

A device is already known which includes two rails to be fixed parallel to the floor of the motor vehicle and two coupling members fixed to the seat and which can be engaged in a removable and adjustable manner in the two rails.

Each rail is essentially C-shaped with the two flat upper edges affected by cavities spaced from each other at a constant pitch P and facing similar cavities obtained in the opposite edge so as to together define a plurality of circular openings at a constant pitch P.

Each coupling member includes an elongated body to be positioned above each rail and affected by a plurality of mushroom-shaped elements, solidly fixed to the elongated body in positions spaced apart from each other with the same pitch P so as to be able to be inserted simultaneously within the circular openings of the rail and be able to slide within the longitudinal channel present therein.

The coupling member also includes two further mushroom-shaped elements similar to the previous ones and also positioned with respect to the other mushroom-shaped elements with the same pitch P but axially movable upon rotation command of a knob also capable of having an axial movement to cause the withdrawal at the inside the coupling member of a cylindrical positioning pin, which is spaced from all the mushroom-shaped elements by an amount equal to a multiple of the pitch P plus P/2 and can be made to protrude downwards from the coupling member, similarly to the mushroom-shaped elements, or it can be completely withdrawn into the body of the coupling member.

The operation of this known locking device is as follows: to engage a hooking member in the respective rail, first the positioning pin is retracted into the body of the hooking member by appropriately operating the knob, and then it is made to engage with all its mushroom elements in the openings of the guide rails. Subsequently the seat with both coupling members fixed to it is moved manually along the guide rails of P/2, so that all the mushroom elements engage in the guide rails between one opening and the adjacent opening. The knob is then operated so as to make the positioning pin come out of the body of the coupling member and make it engage in one of the openings of the guide rail facing it, thus preventing further longitudinal sliding of the coupling member. along this one.

It is also foreseen that after having carried out this engagement, which for obvious reasons of operational simplicity requires that a certain amount of clearance exists between the parts to be engaged together, the knob is rotated to cause the axial return of the two mushroom-shaped elements associated with it, which, retracting into the body of the coupling member, engage the two edges of the guide rail in a vice and in this way practically eliminate the clearance between the parts connected to each other.

This solution solved the problem of the removable attachment of a seat to the floor of a motor vehicle but revealed to be difficult to operate both in the coupling and uncoupling phase. As regards the coupling phase, in fact, it is necessary to position the seat so that all the mushroom-shaped elements that protrude from the two attachment members face all the holes in the two guide rails at the same time and this in itself is a rather laborious operation, above all due to the weight and bulk of the seat and the difficulty of visually checking the correct positioning of the elements with respect to the holes in the guide rails. As regards the uncoupling phase, this is made difficult by the need to previously move the seat exactly by P/2 with respect to the locking position, in order to position all the mushroom elements in correspondence with the openings present in the guide rails, and it is evident the difficulty of carrying out in a precise manner this movement, without which it is not possible to disengage the coupling member from the respective rail.

Another known solution, described in EP 2353926, foresees that the coupling member comprises an elongated hollow body, from whose lower surface a positioning pin protrudes, which can be engaged in one of the openings of the guide rail.

A slider slides inside the hollow body, and a plurality of mushroom-shaped elements spaced apart by pitch P are applied to this slider; they protrude towards the guide rail and can be moved with the slider along the hollow body by a knob articulated to it and mobile between two extreme positions. In a first extreme position of the knob the mushroom elements are spaced by an integer multiple of the pitch P from the positioning pin and this allows engagement by the coupling member in the guide rail, while in the second extreme position of the knob the mushroom elements are moved from their previous position and engage the guide rail.

Since the upper surface of the head of these mushroom elements or part of these mushroom elements is configured as an inclined plane, the longitudinal movement of the slider with the mushroom elements also determines the wedge-shaped engagement of the rail edges by these and therefore the constraint of the entire coupling member to the guide rail.

This known coupling device has revealed to be more valid than the previous one, because with a single maneuver it engages the coupling member in the guide rail and locks it by gripping it, and with the opposite maneuver it brings the mushroom elements in the correct position for release, but it also revealed its limitations essentially due to the fact that this engagement and this locking do not occur in correspondence with the central point of the portion of rail edge between two adjacent openings, but in correspondence with one end of this portion, and therefore in conditions of limited reliability, which among other things requires a rather precise and laborious execution of the parties involved.

Furthermore, the same shape of the mushroom elements and of the positioning pin in itself makes it difficult to engage the coupling member in the guide rail and this engagement in practice is even more difficult if one considers that it must occur simultaneously for two coupling members mounted on a seat of considerable weight and bulk and therefore difficult to manoeuvre.

Finally, the same manner of gripping the edges of the guide rail by the mushroom-shaped elements is of a type that can be defined as unidirectional in the sense that it effectively stabilizes the seat with respect to the structure of the motor vehicle in the event of a frontal impact, but does not stabilize it in case of rear-end collision by another vehicle. Furthermore, US5489172 shows an adjustable locking device of a motor vehicle seat, comprising a guide rail to be fixed to the floor of the motor vehicle, having a C-shaped section with the central base to be fixed to said floor and with two lateral walls and extending into two lips folded horizontally towards each other.

The aim of the invention is to realize a device for adjustable locking of a seat to the structure of a motor vehicle, which is simpler in operation than that of traditional devices both in the coupling phase and in the release phase.

Another purpose of the invention is to realize a locking device that is safer than traditional ones both in the case of a frontal impact and in the case of a rear-end impact by another motor vehicle.

Another purpose of the invention is to realize a locking device that operates as an alternative to traditional ones.

Another object of the invention is to realize a locking device that is interchangeable with traditional ones.

All these objects and others that will appear from the following description are achieved, according to the invention, with an adjustable locking device for a motor vehicle seat as defined in claim 1.

The present invention is further clarified below in some of its preferred practical embodiments reported for purely illustrative and non-limiting purposes with reference to the attached drawings, in which:
- figure 1: shows a perspective view from above of the coupling member of a locking device according to the invention in the condition unlocked from the guide rail,
- figure 2: shows it in perspective view from below,
- figure 3: shows it in longitudinal section,
- figure 4: shows it in the same perspective view as fig. 1 but in the condition blocked to the guide rail, which is also shown separate from the coupling member,
- figure 5: shows a perspective view from below,
- figure 6: shows it in longitudinal section,
- figure 7: shows it in an exploded perspective view, e
- figure 8: shows it in perspective view in the embodiment with double coupling member.

As can be seen in the figures, the adjustable locking device according to the invention comprises, in a traditional manner, a coupling member, indicated globally with 2, to be rigidly fastened to the lower part of the structure of a seat of a motor vehicle. Generally, two coupling members 2 are applied to the seat structure, arranged parallel to each other and cooperating with guide rails 4, applied to the floor of a motor vehicle so that the two coupling members 2 can slide along the guide rails, can be locked to them in the chosen longitudinal position and can be separated from them when the seat must be removed from the passenger compartment of the motor vehicle to make room for luggage or wheelchairs for disabled people.

In the present description, reference will be made to a single locking device, i.e. to a single coupling member 2 and to a single guide rail 4, but it is understood that generally for each seat there are two coupling members 2 cooperating with two guide rails 4.

The guide rail 4 is in itself traditional and can advantageously be made up of a piece of metal profile, for example made of aluminium. It can have a C-shaped section, with a base to be stably fixed in a traditional manner to the floor of the motor vehicle and with two side walls pointing upwards and subsequently folded horizontally inwards to define two upper lips 6, which delimit each other a longitudinal slot for sliding of the coupling member 2.

On each of the two lips 6 there is a plurality of arcuate openings 8 facing the arcuate openings 8 of the opposite lip 6 and defining with these a plurality of circular openings 10, spaced from each other with a constant pitch P.

The coupling member 2 comprises a hollow elongated body 14, preferably made of shaped metal sheet. It is affected by one or more slots at the top, through which screws 16 pass for fixing the coupling member 2 in a traditional manner to the structure of a seat.

A plurality of mushroom-shaped elements 18 protrude from the lower wall of the hollow body 14, each comprising a short, preferably cylindrical stem, having a diameter smaller than the minimum distance between the two lips 6 of the guide rail 4, and an inferiorly conical head, having a diameter just smaller than the diameter of the circular openings 10 obtained in the guide rail 4.

As can be seen in the drawings, the mushrooms 18, which protrude from the hollow body 14 in the example represented, are grouped in a first series of three mushrooms 18 arranged in the front part of the hollow body 14, and in a second series of four mushrooms 18, arranged in the rear part of the hollow body 14. In the drawings the front part of the coupling member is placed on the left and the rear part on the right.

In any case, it should be specified that the number of mushrooms 18 and their arrangement are not binding, while it is essential that the mushrooms 18 respect the same pitch P, so that as will be better seen later, all the mushrooms 18 can simultaneously engage corresponding openings 10 of the guide rail 4.

In addition to the mushrooms 18, which can be defined as first type or fixed mushrooms, as they are substantially prevented from carrying out significant axial movements with respect to the hollow body 14, one or more mushrooms 20 are also associated with it, which can be defined as second type or mobile mushrooms . They can advantageously have the same shape as the fixed mushrooms 18 and can advantageously be placed between the two series indicated above of these, as has been shown by way of example in the drawings, respecting in any case the pitch P, so as to be able to engage circular openings 10 of the guide rail 4 when the fixed mushrooms 18 engage other circular openings 10.

Preferably both the mushrooms 18 and the mushrooms 20 have a frusto-conical lower surface.

However, unlike the fixed mushrooms 18, the mushrooms 20 have the stem fixed to a block for simultaneous movement 22, housed inside the hollow body 14. Since the stems of the mushrooms 20 pass through the lower wall 15 of the hollow body 14 at passage holes obtained in it, these mushrooms 20 can move axially integrally with the movement block 22 but cannot perform any movement parallel to the axis of the hollow body 14.

Inside the hollow body 14 a slider 26 can slide, to which a first positioning pin 24 is fixed, having a cylindrical shape and a diameter substantially equal to that of the head of the mushrooms 18 and 20, i.e. just smaller than the diameter of the circular openings 10 of the guide rail 4. It passes through a longitudinal slot 28, which is obtained in the lower wall 15 of the hollow body 14 and has a length equal to at least P/2 so that there is at least one position in which the pin 24 is located at distances multiple of the step P from all mushrooms 18,20.

The slider 26, which is actuated in its axial movements along the hollow body 14 by a lever or knob 30, better described below, is also affected, in correspondence with the movement block 22 of the mobile mushrooms 20, by an inclined plane 32, cooperating with an inclined plane 34 obtained in the overlying movement block 22 and kept adherent to it by a spring 36 placed between it and the upper part of the hollow body 14.

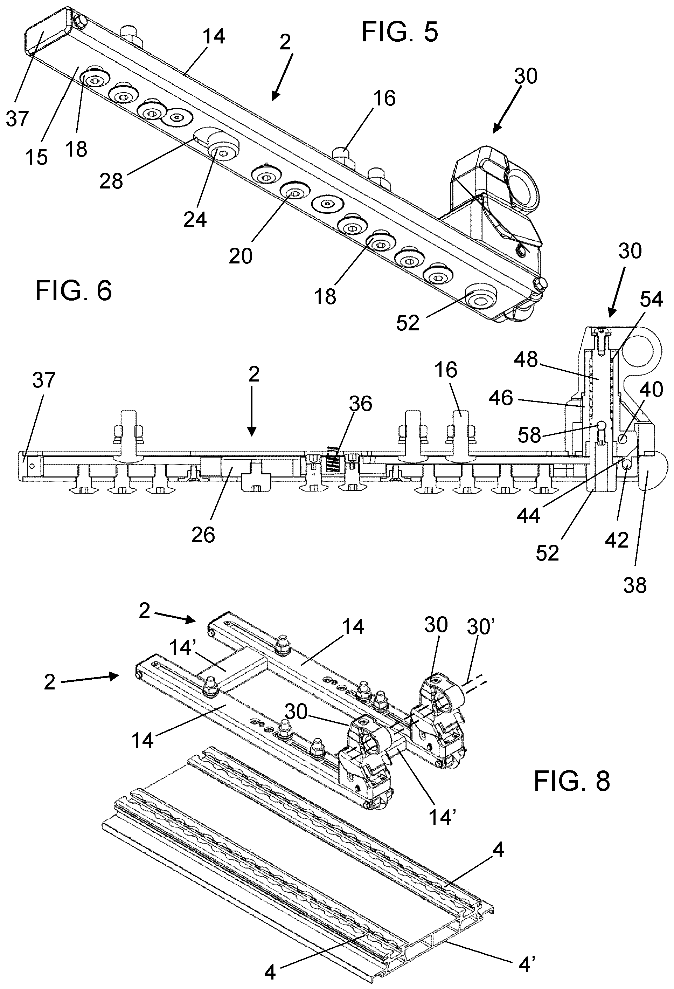

The mushrooms 18 can be rigidly fixed to the hollow body 14 but alternatively they can have the stem that passes through a corresponding hole made in the lower wall 15 of the hollow body 14 and is fixed to an elongated block 35 sliding within a slot made in the slider 26. This solution is preferable because it allows the mushrooms 18 to have a small clearance with respect to the hollow body and in this way to cover udavoidable machining or assembly inaccuracies, which are an obstacle to an easy and rapid simultaneous engagement of two guide rails 4, mounted independently on the floor of the motor vehicle, by two separate coupling members 2 mounted independently on the seat of the motor vehicle itself. Indeed, in order to make this engagement even easier and quicker, the invention also foresees that the two guide rails 4 can belong to a single profile 4' and that the hollow bodies 14 of two distinct coupling members 2 are rigidly connected between them at a distance corresponding to the distance between the two guide rails 4 of the profile 4' by means of crosspieces 14'. In this case it can be advantageously provided that the two knobs 30 of the two coupling members 2 can be made integral with each other, for example by means of a transversal bar 30' to which both knobs are made integral, so that with a single maneuver both coupling members 2 can be activated (fig. 8).

With reference to a single coupling member 2, the front end of the hollow body 14 is closed by a cap 37, while the rear end is closed by a block 38, to which the knob 30 is articulated at a first transversal pin 40.

In a position below the pin 40, a second pin 42 is mounted at the base of the knob 30, parallel to the first pin 40 and engaged in a vertical groove 44 obtained at the rear end of the slider 26, so that the articulation movement of the knob 30 around its pin 40 is transformed into an axial movement of the slider 26 along the hollow body 14.

The knob 30 can advantageously comprise a hollow body 46 articulated to the block 38 and a sort of piston 48, slidably housed within the hollow body 46 and provided at the top with a grip eyelet 50 and at the bottom with a second positioning pin 52, entirely similar to the first positioning pin 24. A helical spring 54, placed between the hollow body 46 and the piston 48, acts on the latter in the direction of pushing the second positioning pin 52 towards the lower opening of the hollow body 46.

The rear closing block 38 is affected by a lower circular opening facing a similar circular opening 56 obtained in the lower wall 15 of the hollow body 14 in a position consistent with the pitch P and intended to be crossed by the second positioning pin 52, when the axis of the piston 48 is orthogonal to the axis of the hollow body 14. This orthogonal position can be made stable by the engagement of a transversal pin 58, integral with the piston 48 and protruding laterally with its ends from the hollow body 46, which houses it, in two vertical grooves 60 obtained in the block 38, to which the hollow body 46 is articulated. Furthermore, the vertical movement of the pin 58 along the vertical grooves 60 can advantageously be shown by two abutment marks, which are present in the rear closing block 38 and in the piston 48 and are aligned when the second positioning pin 52 is engaged in the circular opening 56 of the hollow body 14. In this way, the stable locking condition of the coupling member 2 to the guide rail 4 is also visually signalised.

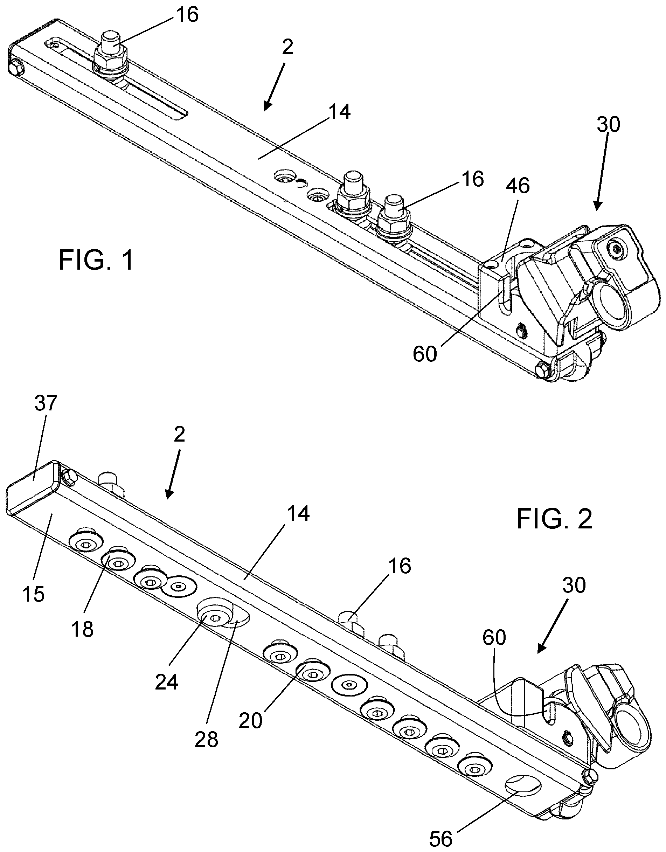

The operation of the locking device described above can be better understood if we start from an initial condition of a seat separated from the floor of the motor vehicle. In this condition the knob 30 of each locking device is arranged in the inclined position illustrated in figures 1 - 3: the slider 26 is in an axial position within the hollow body 14 such as to maintain the first positioning pin 24 in a position consistent with the pitch P and also to keep the inclined plane 32 so that the action of the spring 36 on the movement block 22 keeps the mobile mushrooms 20 in their position most protruding from the lower wall 15 of the hollow body 14.

Again in this condition, the external body 46 of the knob 30 is rotated so that the spring 54, despite its tendency to make the second positioning pin 52 protrude from the external body itself, cannot do so due to the inclined arrangement of the knob 30 and of the misalignment between the piston 48 and the lower opening 56 of the lower wall 15 of the hollow body 14.

In this condition the seat can be placed on the two guide rails 4 so that the mushrooms 18,20 and the first positioning pin 24 simultaneously engage the circular openings 10 of the guide rails themselves in correspondence with the desired longitudinal position of the seat. This operation is made extremely quick, convenient and precise thanks to the conical shape of the mushrooms 18,20, which constitute a sort of invitation to correct centering.

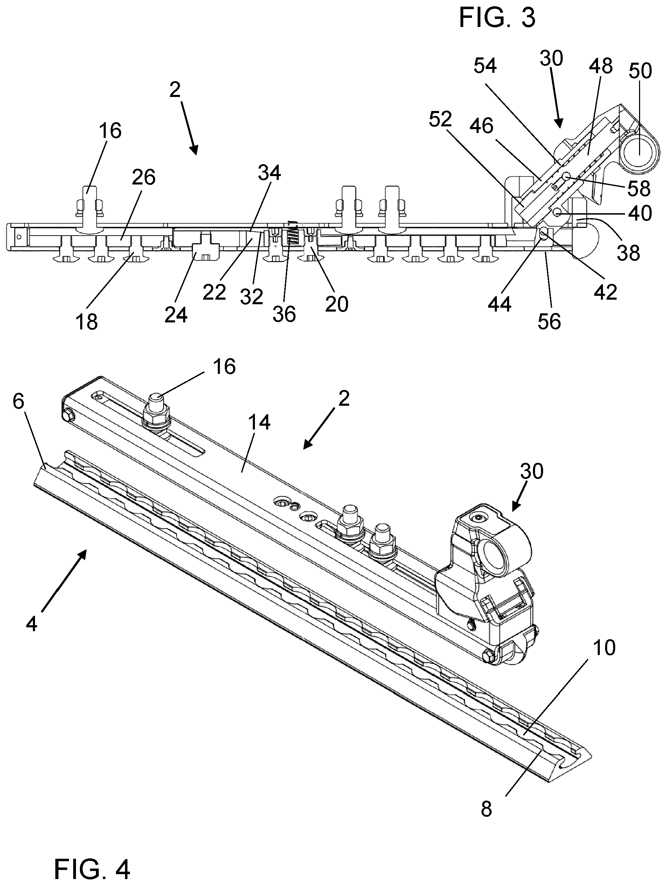

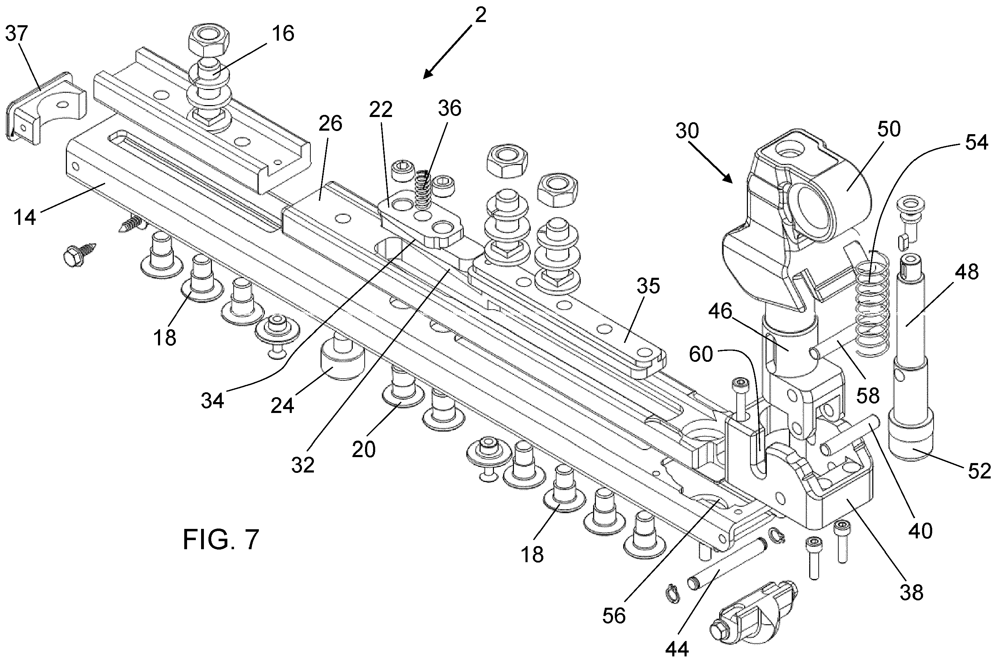

Once the seat has been correctly positioned, the two knobs 30 are brought to the vertical position illustrated in figures 4 - 7. If the connection of the two coupling members 2 is envisaged for their simultaneous operation, this simultaneous operation can advantageously be carried out through the single transversal bar 30', connecting the two gripping eyes 50 of the two pistons 48.

Moving each knob 30 from the inclined position to the vertical position has multiple effects.

A first effect consists in the axial rearward movement of the slider 26 inside the hollow body 14 thanks to the articulated connection between the pin 42, integral with the knob 30, and the groove 44 integral with the slider 26; and since the first positioning pin 24 is integral with the slider 26, the backward movement of the slider 26 with respect to the hollow body 14 translates into a forward movement of the hollow body 14 with respect to the guide rail 4.

The sizing of the various parts is such that this forward movement is approximately equal to P/2.

In turn, the axial displacement of P/2 of the hollow body 14 causes the first positioning pin 24, which is engaged in a circular opening 10 of the guide rail 4 and blocks the slider 26 with respect to it, causes the translation axial movement of the hollow body 14 along the guide rail 4 and the dragging along this of all the mushrooms 18,20 which are positioned substantially halfway between adjacent circular cavities 10.

At the end of the stroke of the slider 26, its inclined plane 32 interacted with the inclined plane 34 of the movement block 22 in the sense of having recalled the two mobile mushrooms 20 towards the inside of the slider 26 and having blocked the coupling member 2 in a vice to the two lips 6 of the guide rail 4 to stabilize the position of the seat with respect to the floor of the motor vehicle.

When the knob 30 has reached the vertical position, the second positioning pin 52 faces the opening 56, which in turn faces a circular opening 10 of the guide rail 4 and is pushed by the spring 54 within the opening itself by stably blocking to the guide rail not only the slider 26 of the coupling member 2 but also its hollow body 14, so as to offer an effective contrast to sudden movements of the seat not only in the case of a frontal impact, but even in the case of a rear-end collision.

In order to remove the seat from the motor vehicle, the operations are carried out in reverse order: it is sufficient to firstly unlock the knob 30 by sliding its piston 48 axially along the hollow body 46 so as to extract the second positioning pin 52 from the corresponding circular opening 10 of the guide rail 4, and then bring the knob 30, thus unlocked, to an inclined position.

The operations already described for locking take place in reverse sequence and lead first to the unlocking of the two mobile mushrooms 20 which, once unlocked, allow the slider 26 to slide with respect to the hollow body 14, and this sliding, caused by the same movement of the knob 30, brings all the mushrooms 18,20 into a position facing the respective circular openings 10 of the guide rail 4.

At this point the seat can be easily removed.

The preceding description allows to appreciate the advantages that the locking device according to the invention allows to achieve.

An advantage consists in the great ease with which the seat can be correctly positioned on the guide rails 4, thanks to the conical shape of the mushrooms 18,20, which cause the first positioning pin 24 to precisely face a circular opening 10 of the guide rail and enter it.

Another advantage consists in the high safety, with which the locking of the seat is obtained thanks to the stable and without degrees of freedom engagement of the coupling member 2 in the guide rail 4, engagement which occurs not only between the slider 26 and the guide rail 4 via the first positioning pin 24, but also between the hollow body 14 and the guide rail 4 via the second positioning pin 52.

Another advantage consists in the high simplicity of the coupling and uncoupling operations, which are carried out with a single manoeuvre, which also acts on multiple locking devices.

Another advantage consists in the high simplicity of the operations to be carried out to both lock and unlock the seat.

Another advantage consists in the possibility of also visually checking the engagement of the second positioning pin 52 in a circular opening 10 of the guide rail 4 and of having the certainty that due to possible dirt this engagement has not occurred despite inclination maneuver on the knob 30 has occurred.

Another advantage consists in the fact that the conformation of the various parts and the manner of their operation allow the locking device to be configured in such a way as to make mutual engagement operations quite easy and to simultaneously activate two locking members with a single manoeuvre.

## Claims

1. Adjustable locking device of a motor vehicle seat, comprising a guide rail (4) to be fixed to the floor of the motor vehicle, having a C-shaped section with the central base to be fixed to said floor and with two lateral walls pointing upwards and extending into two lips (6) folded horizontally towards each other and affected by a plurality of equal openings (10) with constant pitch P, and a coupling member (2) to be fixed to the seat structure and provided with protrusions (18,20,24,56) which can be selectively engaged in said openings (10), wherein said coupling member (2) comprises:
- a hollow body (14) with a lower horizontal wall (15), from which a plurality of first mushroom-shaped elements (18) protrude, longitudinally aligned and spaced apart with a pitch P or a multiple of P and having the stem sized in such a way to pass into the longitudinal slot delimited by said lips (6) of said guide rail (4) and the head sized so as to be able to slide within the longitudinal cavity of the guide rail itself and to be able to disengage from it only in correspondence with said openings (10),
- a cursor (26) sliding within said hollow body (14) and carrying a first positioning pin (24) configured to fit one of said openings (10) of said guide rails (4) after having crossed a longitudinal slot (28) formed in said lower horizontal wall (15) of said hollow body (14), said cursor (26) having an inclined plane portion (32) cooperating with an inclined plane portion (34) formed in a movement block (22), to which the stem of at least one second mushroom-shaped element (20) is fixed having a shape substantially similar to that of said first mushroom-shaped elements (18) and movable axially with said stem within a through opening formed in said wall (15) between a position more protruding from the wall itself (15) and substantially analogous to that of said first mushroom-shaped elements (18) and a more retracted position within said hollow body (14) to block the lips (6) of said guide rail (4) against said lower horizontal wall (15) of said hollow body (14),
- means for axial movement of said cursor (26) within said hollow body (14) between a first disengagement position, in which said mushroom-shaped elements (18,20) have a distance multiple of the pitch P from said first positioning pin (24), and a second engagement position, in which said mushroom elements (18,20) are moved with respect to the previous disengagement position,
- a knob (30) for operating said movement means,
- a second positioning pin (52) configured to fit through a second opening (56) formed in said horizontal lower wall (15) of said hollow body (14) in a position consistent with said pitch P and to fit one of said openings (10) when said knob (30) is arranged so as to cause said movement means to assume said second engagement position.

2. Device according to claim 1 **characterized in that** it comprises within said hollow body (14) elastic means (36) which keep said inclined plane portions (32, 34) of said cursor (26) and of said movement block (22) adherent to each other and at the same time keep said second mushroom-shaped element (20) in said position most protruding from the lower wall (15) of said hollow body (14).

3. Device according to one or more of the preceding claims, **characterized in that** said first mushroom-shaped elements (18) are gathered in two groups, between which at least one second mushroom-shaped element (20) is interposed.

4. Device according to one or more of the preceding claims, **characterized in that** at least part of said mushroom-shaped elements (18,20) have a substantially conical head.

5. Device according to one or more of the preceding claims **characterized in that** said means for moving said cursor (26) comprise a knob (30) which is articulated to said hollow body (14) and to said cursor (26) and is movable between two extreme positions, in one of which, or first position, said first positioning pin (24) is positioned with respect to said first and second mushroom elements (18,20) in a manner consistent with the pitch P, said second mushroom element (20) protrudes from the lower wall (15) of said hollow body (14) to a substantially similar extent to said first mushroom elements (18) and said second positioning pin (52) is inactive, while in the other extreme position, or second position, said first positioning pin (24) is moved with respect to the previous position, the head of said second mushroom-shaped element (20) blocks said lips (6) of said guide rail (4) in a vice against said lower horizontal wall (15) of said hollow body (14) and said second positioning pin (52) passes through said second opening (56) and engages an opening (10) of said guide rail (4) .

6. Device according to claim 5 **characterized in that** said knob (30) is internally hollow and houses inside said second positioning pin (52), which is movable axially along the same knob and is associated with a spring ( 54) which tends to push it so as to make it come out through said second opening (56) when said knob (30) is in said second position.

7. Device according to claim 6 **characterized in that** said second positioning pin (52) extends inside said knob (30) until it comes out through the end opposite to the articulation end to said hollow body (14) with a traction gripping portion (50) by an operator.

8. Device according to one or more of the preceding claims **characterized in that** said knob (30) and said second positioning pin (52) are provided with visual indicators of the condition of said second positioning pin engaged in said opening (10).

9. Device according to one or more of the preceding claims **characterized in that** it comprises means for stable positioning of said knob (30) in at least one of said extreme positions and means operable by an operator to deactivate said stable positioning means when said knob (30) must be moved from one of these extreme positions to the other.

10. Device according to one or more of the preceding claims **characterized in that** it comprises two guide rails (4) arranged parallelly integral to each other and two coupling members (2) even made integral with each other and arranged at a distance reciprocal compatible with the distance existing between said guide rails (4).

11. Device according to claim 10 **characterized in that** the two guide rails (4) belong to a single profile (4')

12. Device according to claim 10 and/or 11 **characterized in that** it comprises a connecting element (30') between the traction gripping portions (50) of the two coupling members (2).

13. Device according to one or more of the preceding claims **characterized in that** said mushroom elements (18,20) in said second engagement position are moved with respect to said first disengagement position by approximately P/2.

14. Device according to one or more of claim 5 to 13 **characterized in that** said first positioning pin (24) in said second extreme position is moved with respect to said first extreme position by approximately P/2.

## Patentansprüche

1. Verstellbare Verriegelungsvorrichtung eines Kraftfahrzeugsitzes, umfassend eine am Boden des Kraftfahrzeugs zu befestigende Führungsschiene (4), aufweisend einen C-förmigen Abschnitt, mit der am Boden zu befestigenden zentralen Basis, und mit zwei nach oben weisenden Seitenwänden, die sich in zwei Lippen (6) erstrecken, die horizontal aufeinander zu gefaltet sind und von einer Vielzahl von gleichen Öffnungen (10) mit konstanter Steigung P beeinflusst werden, und ein Kopplungselement (2), das an der Sitzstruktur zu befestigen ist und mit Vorsprüngen (18, 20, 24, 56) versehen ist, die selektiv in die Öffnungen (10) eingreifen können, wobei das Kopplungselement (2) umfasst:
- einen Hohlkörper (14) mit einer unteren horizontalen Wand (15), von der eine Vielzahl von ersten pilzförmigen Elementen (18) abstehen, die in Längsrichtung ausgerichtet und mit einer Teilung P oder einem Vielfachen von P beabstandet sind und deren Schaft so bemessen ist, dass er in den von den Lippen (6) der Führungsschiene (4) begrenzten Längsschlitz hindurchgeht, und deren Kopf so bemessen ist, dass er innerhalb des Längshohlraums der Führungsschiene selbst gleiten kann und nur in Übereinstimmung mit den Öffnungen (10) außer Eingriff kommen kann,
- einen Schieber (26), der innerhalb des Hohlkörpers (14) gleitet und einen ersten Positionierungsstift (24) trägt, der so konfiguriert ist, dass er in eine der Öffnungen (10) der Führungsschienen (4) passt, nachdem er einen Längsschlitz (28) gekreuzt hat, der in der unteren horizontalen Wand (15) des Hohlkörpers (14) ausgebildet ist, wobei der Schieber (26) einen geneigten ebenen Abschnitt (32) aufweist, der mit einem geneigten ebenen Abschnitt (34) zusammenwirkt, der in einem Bewegungsblock (22) ausgebildet ist, an dem der Schaft mindestens eines zweiten pilzförmigen Elements (20) befestigt ist, das eine Form aufweist, die im Wesentlichen der der ersten pilzförmigen Elemente (18) ähnlich ist, und axial mit dem Schaft innerhalb einer Durchgangsöffnung, die in der Wand (15) ausgebildet ist, zwischen einer Position, die mehr von der Wand selbst (15) vorsteht und im Wesentlichen analog zu der der ersten pilzförmigen Elemente (18) ist, und einer mehr zurückgezogenen Position innerhalb des Hohlkörpers (14) beweglich ist, um die Lippen (6) der Führungsschiene (4) gegen die untere horizontale Wand (15) des Hohlkörpers (14) zu blockieren,
- Mittel zur axialen Bewegung des Schiebers (26) innerhalb des Hohlkörpers (14) zwischen einer ersten Löseposition, in der die pilzförmigen Elemente (18, 20) ein Abstandsvielfaches der Teilung P von dem ersten Positionierungsstift (24) aufweisen, und einer zweiten Eingriffsposition, in der die Pilzelemente (18, 20) in Bezug auf die vorherige Löseposition bewegt werden,
- einen Knopf (30) zum Betätigen des Bewegungsmittels,
- einen zweiten Positionierungsstift (52), der konfiguriert ist, um durch eine zweite Öffnung (56) zu passen, die in der horizontalen unteren Wand (15) des Hohlkörpers (14) in einer Position ausgebildet ist, die mit der Teilung P übereinstimmt, und um in eine der Öffnungen (10) zu passen, wenn der Knopf (30) angeordnet ist, um zu bewirken, dass das Bewegungsmittel die zweite Eingriffsposition einnimmt.

2. Vorrichtung nach Anspruch 1, **dadurch gekennzeichnet, dass** sie innerhalb des Hohlkörpers (14) elastische Mittel (36) umfasst, die die geneigten ebenen Abschnitte (32, 34) des Schiebers (26) und des Bewegungsblocks (22) aneinander haftend halten und gleichzeitig das zweite pilzförmige Element (20) in der am weitesten von der unteren Wand (15) des Hohlkörpers (14) vorstehenden Position halten.

3. Vorrichtung nach einem oder mehreren der vorhergehenden Ansprüche, **dadurch gekennzeichnet, dass** die ersten pilzförmigen Elemente (18) in zwei Gruppen zusammengefasst sind, zwischen denen mindestens ein zweites pilzförmiges Element (20) eingefügt ist.

4. Vorrichtung nach einem oder mehreren der vorhergehenden Ansprüche, **dadurch gekennzeichnet, dass** zumindest ein Teil der pilzförmigen Elemente (18, 20) einen im Wesentlichen konischen Kopf aufweist.

5. Vorrichtung nach einem oder mehreren der vorhergehenden Ansprüche, **dadurch gekennzeichnet, dass** die Mittel zum Bewegen des Schiebers (26) einen Knopf (30) umfassen, der an dem Hohlkörper (14) und dem Schieber (26) angelenkt ist und zwischen zwei Extrempositionen bewegbar ist, wobei in einer dieser Positionen oder in der ersten Position der erste Positionierungsstift (24) in Bezug auf das erste und zweite Pilzelement (18, 20) in einer Weise positioniert ist, die mit der Teilung P übereinstimmt, wobei das zweite Pilzelement (20) von der unteren Wand (15) des Hohlkörpers (14) in einem im Wesentlichen ähnlichen Ausmaß wie die ersten Pilzelemente (18) vorsteht und der zweite Positionierungsstift (52) inaktiv ist, während in der anderen Extremposition oder zweiten Position der erste Positionierungsstift (24) in Bezug auf die vorherige Position bewegt wird, der Kopf des zweiten pilzförmigen Elements (20) die Lippen (6) der Führungsschiene (4) in einem Spannstock gegen die untere horizontale Wand (15) des Hohlkörpers (14) blockiert und der zweite Positionierungsstift (52) durch die zweite Öffnung (56) hindurchgeht und in eine Öffnung (10) der Führungsschiene (4) eingreift.

6. Vorrichtung nach Anspruch 5, **dadurch gekennzeichnet, dass** der Knopf (30) innen hohl ist und innerhalb des zweiten Positionierungsstifts (52) untergebracht ist, der axial entlang desselben Knopfes beweglich ist und mit einer Feder (54) assoziiert ist, die dazu neigt, ihn zu drücken, um ihn durch die zweite Öffnung (56) herauskommen zu lassen, wenn sich der Knopf (30) in der zweiten Position befindet.

7. Vorrichtung nach Anspruch 6, **dadurch gekennzeichnet, dass** sich der zweite Positionierungsstift (52) innerhalb des Knopfes (30) erstreckt, bis er durch das dem Gelenkende gegenüberliegende Ende mit einem Zuggreifabschnitt (50) durch eine Bedienperson zum Hohlkörper (14) austritt.

8. Vorrichtung nach einem oder mehreren der vorhergehenden Ansprüche, **dadurch gekennzeichnet, dass** der Knopf (30) und der zweite Positionierungsstift (52) mit visuellen Anzeigen des Zustands des zweiten Positionierungsstifts versehen sind, der in die Öffnung (10) eingegriffen ist.

9. Vorrichtung nach einem oder mehreren der vorhergehenden Ansprüche, **dadurch gekennzeichnet, dass** sie Mittel zum stabilen Positionieren des Knopfes (30) in mindestens einer der Extrempositionen und Mittel umfasst, die von einem Bediener betätigt werden können, um die stabilen Positionierungsmittel zu deaktivieren, wenn der Knopf (30) von einer dieser Extrempositionen in die andere bewegt werden muss.

10. Vorrichtung nach einem oder mehreren der vorhergehenden Ansprüche, **dadurch gekennzeichnet, dass** sie zwei Führungsschienen (4), die parallel zueinander einstückig angeordnet sind, und zwei Kopplungselemente (2) umfasst, die sogar einstückig miteinander ausgebildet sind und in einem Abstand zueinander angeordnet sind, der mit dem zwischen den Führungsschienen (4) bestehenden Abstand kompatibel ist.

11. Vorrichtung nach Anspruch 10, **dadurch gekennzeichnet, dass** die zwei Führungsschienen (4) zu einem einzigen Profil (4') gehören.

12. Vorrichtung nach Anspruch 10 und/oder 11, **dadurch gekennzeichnet, dass** sie ein Verbindungselement (30') zwischen den Zuggreifabschnitten (50) der zwei Kupplungselemente (2) umfasst.

13. Vorrichtung nach einem oder mehreren der vorhergehenden Ansprüche, **dadurch gekennzeichnet, dass** die Pilzelemente (18, 20) in der zweiten Eingriffsposition in Bezug auf die erste Löseposition um etwa P/2 bewegt werden.

14. Vorrichtung nach einem oder mehreren der Ansprüche 5 bis 13, **dadurch gekennzeichnet, dass** der erste Positionierungsstift (24) in der zweiten Extremposition in Bezug auf die erste Extremposition um etwa P/2 bewegt wird.

## Revendications

1. Dispositif de verrouillage réglable d'un siège de véhicule automobile, comprenant un rail de guidage (4) à fixer au plancher du véhicule automobile, ayant une section en forme de C avec la base centrale à fixer audit plancher et présentant deux parois latérales orientées vers le haut et s'étendant en deux lèvres (6) pliées horizontalement l'une vers l'autre et concernées par une pluralité d'ouvertures égales (10) ayant un pas constant P, et un élément de couplage (2) à fixer à la structure du siège et pourvu de protubérances (18, 20, 24, 56) qui peuvent être engagées sélectivement dans lesdites ouvertures (10), ledit élément de couplage (2) comprenant :
- un corps creux (14) doté d'une paroi horizontale inférieure (15), d'où font saillie une pluralité de premiers éléments (18) en forme de champignon, alignés longitudinalement et espacés d'un pas P ou d'un multiple de P et ayant la tige dimensionnée de manière à passer dans la fente longitudinale délimitée par lesdites lèvres (6) dudit rail de guidage (4) et la tête dimensionnée de manière à pouvoir coulisser à l'intérieur de la cavité longitudinale du rail de guidage lui-même et à ne pouvoir s'en dégager qu'en correspondance desdites ouvertures (10),
- un curseur (26) coulissant à l'intérieur dudit corps creux (14) et portant une première broche de positionnement (24) configurée pour s'ajuster à l'une desdites ouvertures (10) desdits rails de guidage (4) après avoir traversé une fente longitudinale (28) formée dans ladite paroi horizontale inférieure (15) dudit corps creux (14), ledit curseur (26) présentant une partie de plan incliné (32) coopérant avec une partie de plan incliné (34) formée dans un bloc de mouvement (22), auquel est fixée la tige d'au moins un second élément (20) en forme de champignon ayant une forme sensiblement similaire à celle desdits premiers éléments en forme de champignon (18) et mobile axialement avec ladite tige à l'intérieur d'une ouverture traversante formée dans ladite paroi (15) entre une position plus saillante par rapport à la paroi elle-même (15) et sensiblement analogue à celle desdits premiers éléments (18) en forme de champignon et une position plus rétractée à l'intérieur dudit corps creux (14) pour bloquer les lèvres (6) dudit rail de guidage (4) contre ladite paroi horizontale inférieure (15) dudit corps creux (14),
- un moyen de déplacement axial dudit curseur (26) à l'intérieur dudit corps creux (14) entre une première position de désengagement, dans laquelle lesdits éléments (18, 20) en forme de champignon possèdent une distance multiple du pas P de ladite première broche de positionnement (24), et une seconde position d'engagement, dans laquelle lesdits éléments (18, 20) en forme de champignon sont déplacés par rapport à la position de désengagement précédente,
- un bouton (30) pour actionner ledit moyen de déplacement,
- une seconde broche de positionnement (52) configurée pour s'ajuster à travers une seconde ouverture (56) formée dans ladite paroi inférieure horizontale (15) dudit corps creux (14) dans une position compatible avec ledit pas P et pour s'ajuster à l'une desdites ouvertures (10) lorsque ledit bouton (30) est disposé de manière à amener ledit moyen de déplacement à prendre ladite seconde position d'engagement.

2. Dispositif selon la revendication 1, **caractérisé en ce qu'**il comprend à l'intérieur dudit corps creux (14) un moyen élastique (36) qui maintient lesdites parties planes inclinées (32, 34) dudit curseur (26) et dudit bloc de mouvement (22) adhérentes l'une à l'autre et en même temps maintient ledit second élément (20) en forme de champignon dans ladite position la plus saillante de la paroi inférieure (15) dudit corps creux (14).

3. Dispositif selon l'une ou plusieurs des revendications précédentes, **caractérisé en ce que** lesdits premiers éléments (18) en forme de champignon sont rassemblés en deux groupes, entre lesquels est interposé au moins un second élément (20) en forme de champignon.

4. Dispositif selon l'une ou plusieurs des revendications précédentes, **caractérisé en ce qu'**au moins une partie desdits éléments (18, 20) en forme de champignon présente une tête sensiblement conique.

5. Dispositif selon l'une ou plusieurs des revendications précédentes, **caractérisé en ce que** ledit moyen de déplacement dudit curseur (26) comprend un bouton (30) étant articulé audit corps creux (14) et audit curseur (26) et étant mobile entre deux positions extrêmes, dans l'une desquelles, ou première position, ladite première broche de positionnement (24) est positionnée par rapport auxdits premiers et seconds éléments (18, 20) en forme de champignon d'une manière cohérente avec le pas P, ledit second élément (20) en forme de champignon fait saillie de la paroi inférieure (15) dudit corps creux (14) dans une mesure sensiblement similaire à celle desdits premiers éléments (18) en forme de champignon et ladite seconde broche de positionnement (52) est inactive, tandis que dans l'autre position extrême, ou seconde position, ladite première broche de positionnement (24) est déplacée par rapport à la position précédente, la tête dudit second élément (20) en forme de champignon bloque lesdites lèvres (6) dudit rail de guidage (4) dans un étau contre ladite paroi horizontale inférieure (15) dudit corps creux (14) et ladite seconde broche de positionnement (52) passe à travers ladite seconde ouverture (56) et s'engage dans une ouverture (10) dudit rail de guidage (4).

6. Dispositif selon la revendication 5, **caractérisé en ce que** ledit bouton (30) est creux intérieurement et loge en son sein ladite seconde broche de positionnement (52), qui est mobile axialement le long du même bouton et est associé à un ressort (54) qui tend à le pousser de manière à le faire sortir par ladite seconde ouverture (56) lorsque ledit bouton (30) se trouve dans ladite seconde position.

7. Dispositif selon la revendication 6, **caractérisé en ce que** ladite seconde broche de positionnement (52) s'étend à l'intérieur dudit bouton (30) jusqu'à ce qu'elle sorte par l'extrémité opposée à l'extrémité d'articulation dudit corps creux (14) avec une partie de préhension (50) par traction par un opérateur.

8. Dispositif selon l'une ou plusieurs des revendications précédentes, **caractérisé en ce que** ledit bouton (30) et ladite seconde broche de positionnement (52) sont munis d'indicateurs visuels de l'état de ladite seconde broche de positionnement engagée dans ladite ouverture (10).

9. Dispositif selon l'une ou plusieurs des revendications précédentes, **caractérisé en ce qu'**il comprend un moyen de positionnement stable dudit bouton (30) dans au moins une desdites positions extrêmes et un moyen actionnable par un opérateur pour désactiver ledit moyen de positionnement stable lorsque ledit bouton (30) doit être déplacé de l'une à l'autre de ces positions extrêmes.

10. Dispositif selon l'une ou plusieurs des revendications précédentes, **caractérisé en ce qu'**il comporte deux rails de guidage (4) disposés parallèlement et solidaires l'un de l'autre et deux organes de couplage (2) rendus solidaires l'un de l'autre et disposés à une distance réciproque compatible avec la distance existant entre lesdits rails de guidage (4).

11. Dispositif selon la revendication 10, **caractérisé en ce que** les deux rails de guidage (4) appartiennent à un seul profilé (4').

12. Dispositif selon la revendication 10 et/ou 11, **caractérisé en ce qu'**il comprend un élément de liaison (30') entre les parties de préhension (50) par traction des deux éléments de couplage (2).

13. Dispositif selon l'une ou plusieurs des revendications précédentes, **caractérisé en ce que** lesdits éléments (18, 20) en forme de champignon dans ladite seconde position d'engagement sont déplacés par rapport à ladite première position de désengagement d'environ P/2.

14. Dispositif selon l'une ou plusieurs des revendications 5 à 13, **caractérisé en ce que** la première broche de positionnement (24) dans ladite seconde position extrême est déplacée par rapport à la première position extrême d'environ P/2.
